# EUROPEAN PATENT SPECIFICATION

(11) **EP 3 772 895 B1**
(45) Date of publication and mention of the grant of the patent: **11.05.2022**
(21) Application number: 19723508.8
(22) Date of filing: 04.04.2019
(51) Int. Cl.: A01G 9/16, A01G 9/24, A01G 9/20

(54) **ADAPTIVE GREENHOUSE FOR NURSERY CROPS**
ADAPTIVES GEWÄCHSHAUS FÜR BAUMSCHULKULTUREN
SERRE ADAPTATIVE POUR CULTURES EN PÉPINIÈRES

(30) Priority: 05.04.2018 IT 201800004245
(43) Date of publication of application: 17.02.2021
(73) Proprietor: Germina S.r.l., 54033 Carrara (IT)
(72) Inventor: GHIO, Marco, 17051 Genova (IT)
(74) Representative: Bottino, Giovanni
(86) International application number: PCT/IT2019/050070
(87) International publication number: WO 2019/193617

(56) References cited:
- WO-A1-2015/167242
- FR-A1- 2 507 056
- FR-A1- 2 601 060
- MD-Z- 1 160

## Description

### Technical Field

The proposed invention relates to a modular structure that can be conveniently used in the field of nursery gardening. Said structure, in use, can recreate in any season the optimal environmental characteristics for the plants and flowers being cultivated. The structure allows to create an optimal natural habitat and minimizes the consumption of energy used in function of the growth stage of the cultivated plant. The scope of primary use of the solution is that of greenhouse crops or functionally equivalent scopes of floriculture and horticulture products, and the like.

### Background art

Agricultural greenhouses have the main objective of maximising the yield of a production even where the environmental conditions are not favourable. Each environmental parameter inside the greenhouse should be consistent with the optimal conditions for the growth and the cultivation of the crop selected according to a delicate microclimatic balance.

For this purpose, greenhouses are commonly provided with a heating or cooling system possibly automatic that intervenes when temperatures are below or above those required and especially suitable for the growth of the species being cultured. Likewise, greenhouses are often equipped with dehumidification/humidification systems that intervene if not optimum humidity values are detected to ensure a healthy growth of the culture and to avoid the growth of fungi, moulds or the proliferation of pathogens. Given the necessarily essential structure of a greenhouse, the heat addition/removal required by a greenhouse depends not only on the type of production therein, but also on the volume size and heat leakage of the structure itself Normally this leakage phenomenon occurs in three different ways: by conduction, convection and radiation. These phenomena imply a low energy efficiency in a greenhouse characterized by high leakage rates.

The document MD1160Z describes a possible example of a greenhouses belonging to the state of the art.

The greenhouse consists of a body, formed of vertical beams, installed on foundation blocks, a roof and side walls. The beams consist of lower and upper parts, located on thrust bearings. On the lower parts of the beams are placed a bevel drive, connected to an electric motor, and two bearings, connected to the shelves of the racks. On the lower shelves of the racks are placed plastic capacities, and on the upper shelves - boxes with soil. On the upper parts of the beams are made threaded portions, on which is placed one support nut with at least one retainer for securing the roof. From the inside, on the sides of the greenhouse are placed radiators, above which are placed pipes, formed of two component parts, in the lower part of which are placed fans, and the upper part is conically expanded and attached to the roof.

The maintenance of an optimal environment inside a greenhouse is often expensive with negative repercussions on the production costs of the cultivated goods, energy consumption, environmental pollution and the need of continuous investments for the management and maintenance of air- conditioning systems.

Normally, for the heating of greenhouses hot air generators powered by gas, chips or fuel oil are used and alternatively thermo-convection electrical heating systems are used.

The dehumidification and humidification systems of the air in a greenhouse are mainly constituted by further energy-intensive systems based on drying or condensation technologies.

A first defect found in the just mentioned air conditioning systems is related to a high energy consumption in order to ensure optimal conditions inside the greenhouses being said consumption caused by the high volume of air to be conditioned although it is not strictly necessary to the crops growth especially during the germination and initial growth phases. This disadvantage is further aggravated by the high contact surface, which is not insulated or cannot be insulated, with negative consequences inherent to heat leakage to the outside. A further defect is represented by the fact that the need to condition large volumes of air involves the use of oversized thermal systems characterized by high investment costs for purchase, operating and ordinary and extraordinary maintenance.

Finally, to contain energy consumption, floriculturists often decide to set, for example in winter, a temperature inside the greenhouse which is slightly lower than the optimal temperature for that specific plant species. This causes the life cycle of development of the plant to have a longer duration than the optimum environmental conditions, thereby extending the harvest times between one sowing and another and causing increases of the market price of that vegetable during the winter months due to the shortage of supply with respect to the optimal months for its cultivation. This is experienced by the farmer as a negative compromise between production revenues and costs for managing the agricultural greenhouse.

### Disclosure of the invention

In this reference context, the present invention aims to propose a device capable of substantially solve the aforementioned drawbacks by minimizing the volume of air to be conditioned necessary for the living space during the growing phase of crops. Given that the plant during its life cycle has a development and a progressive growth outside the ground the aim is to realize a device that can progressively adapt in the form (and in particular in height) to the growth of crops, provide the plant with the optimal space for its growth while reducing to the minimum the volume of air to be conditioned. Said aim is achieved by means of an adaptive greenhouse i.e. capable of adapting in height and vary its volume following the growth and in function of the cultivated plant thereby drastically reducing the energy supplies of conditioning in those phases such as germination and initial growth in which the plants require minimal heights and volumes of air although progressively growing.

The mentioned above aims are achieved through a modular structure that is suitable to adequately exploit spaces of varied shapes and sizes. The base module of said structure consists of a frame on which is anchored a movable roof below which are placed the crops to be produced. Said movable roof is able to vertically translate as the cultivated crops grow in height, thereby minimising the volume of air to be conditioned. This result may be achieved for example thanks to a detection system with laser lever used for detecting the progressive growth of the cultivated plants, said system coupled with a corresponding mechanism for automatic translation that allows the movable roof to rise sufficiently and in correspondence with the growth in height detected by said level. The movable roof also comprises the diffusion vents and the recirculation vents to allow the conditioning of the volume strictly necessary i.e. the one underneath the roof itself. This to affect only the space intended for the growth of the plants instead of the entire environment that hosts the modular structure.

### Detailed Description of the Drawings

Further characteristics and advantages of the proposed technical solution will appear more evident in the following description of a preferred but not exclusive embodiment shown by way of example and not of limitation in the accompanying no. 3 drawings, wherein:
- Fig.1 and 2 show the cultivation module with the movable roof in high position;
- Fig. 3 and 4 show the cultivation module with the movable roof in low position;
- Fig. 5 shows in detail a column, highlighting the metal profile, the worm screw and the integral electric motor;
- Fig. 6 shows the detail relating to the positioning of the laser lever detection system;
- Figs. 7, 8 show the system of vents and diffusers responsible for conditioning, propagating and recycling the conditioned air and in particular show the movable roof seen from below (lower surface with suitable vents from which air is expelled for the conditioning of the cultivable volume below);
- Figs. 9, 10 show the system of vents and diffusers responsible for conditioning, propagating and recycling the conditioned air and in particular show the movable roof seen from the above (upper surface with suitable recirculation and extraction vents of the air from the cultivable volume);
- Fig. 11 shows a detail of the lower surface of the movable roof with evidence of the mutual positioning of the vents and the led strip illumination system; • Figs. 12, 13 show a front view and a lateral arrangement of the diffusers and of the recirculation vents of air with respect to the gap contained in the movable roof Best mode for carrying out the invention

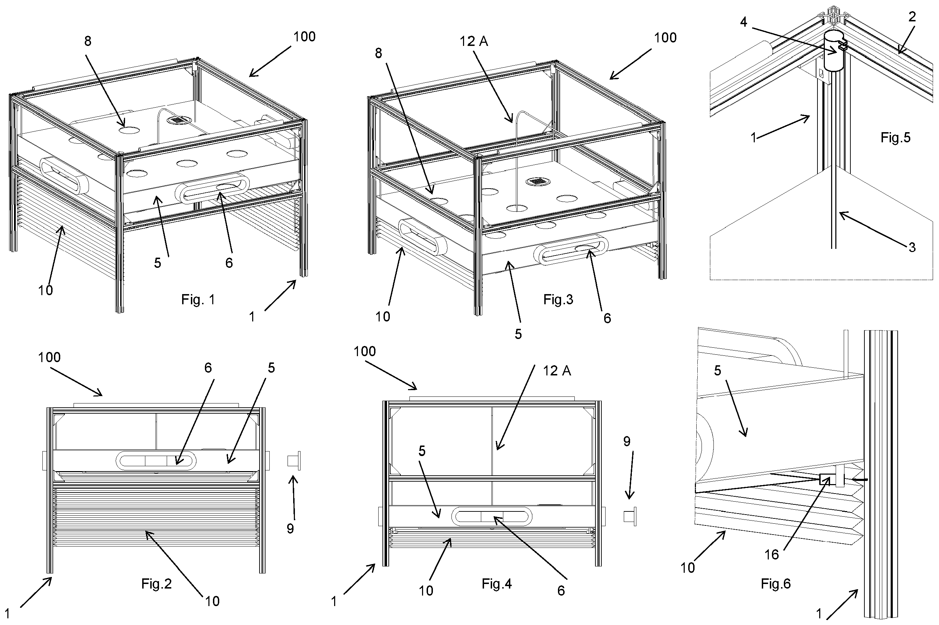

With reference to the figures contained in the accompanying drawings it is shown a cultivation module (100) according to the proposed invention. The module is suitable to contain plants preferably but not necessarily in a pot and is characterized by a frame provided with four vertical columns (1). Said columns are characterized by a metal profile (2) containing in its interior a worm screw (3) which can be actuated by an electric motor (4) controlled by an electronic control unit. A movable roof (5) made of transparent material is anchored and integral with the abovementioned worm screws (3) and due to the rotation of the electric motors (4) is able to vertically translate upwards as shown in Fig. 1 and downwards as shown in Fig. 2 along the metal profiles (2) of said vertical columns (1). The translation along the vertical axis of the movable roof (5) is regulated by an automatic system based on a laser lever detection system (16) consisting of a laser in a radial manner with appropriate coupled sensor which is appropriately positioned below the movable roof (5) and is dedicated to detect and monitor over time the maximum height reached by the plants grown therein to adapt accordingly the space useful to the growth and its environmental conditioning. The movable roof (5) is made of transparent material and is also used for the conditioning of the underlying volume i.e. the volume destined to the crop. For this purpose, the movable roof is equipped with side vents (6) for the introduction of conditioned air from the outside, of horizontal vents (7) for the propagation of said conditioned air to the underlying cultivable volume and vents (8) for air recirculation.

The side vents (6) can be linked allowing the flow of conditioned air to propagate toward any adjacent module and therefore are positioned on the four sides of the cultivation module (100) in order to allow different geometries and spatial dispositions of the modules in function of the space exploited for cultivation. The unused side vents (6) or those not used to supply or for propagate the conditioned air towards other modules can obviously be closed with suitable sealing plugs (9).

The cultivable volume underneath the movable roof (5), and in which conditioned air is diffused, is further closed and thermally insulated on the sides by means of suitable bellow closing walls (10) also made of transparent or semi-transparent material; said bellows closing walls being able to slide and develop along the lateral columns (1) and therefore adapt to the vertical translational movement of the movable roof (5).

The system is also equipped with a spraying irrigation system (11) fixed on the lower side of the movable roof (5) and connected with a pipe (12 A) to a conduit that carries the liquid to be sprayed. In addition, always in the lower part of the movable roof (5), there is an illumination system represented by way of example with led strips (12 B) that allows to manage also crops that require artificial lighting. Said illumination system is powered by an electric connection which is arranged in series with the other adjacent structures in order to propagate the signal across the entire cultivation line. Finally, each module has an electrical interconnection system between the single modules to share data and power for the sensors present and the synchronous operation of the various contiguous modules.

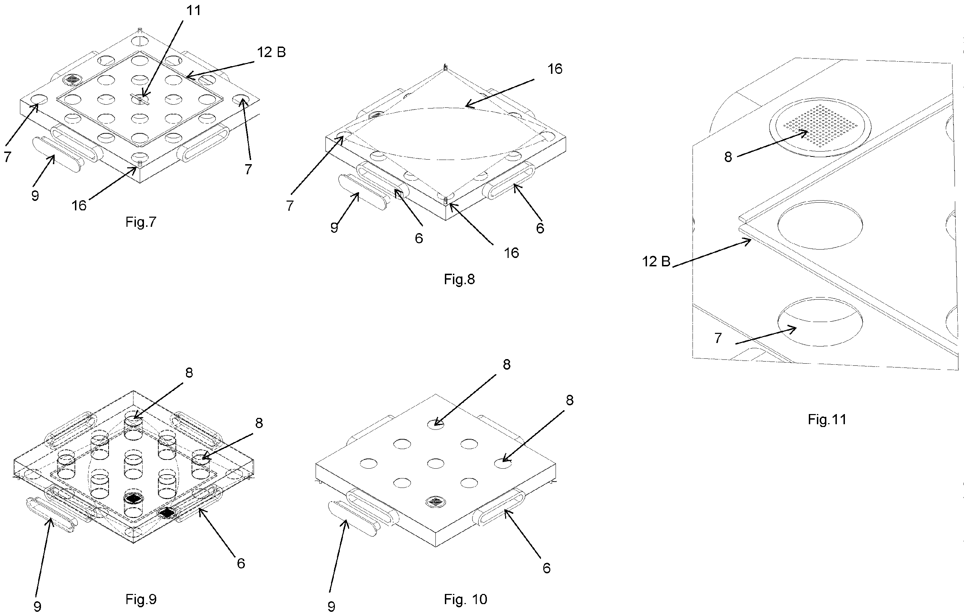

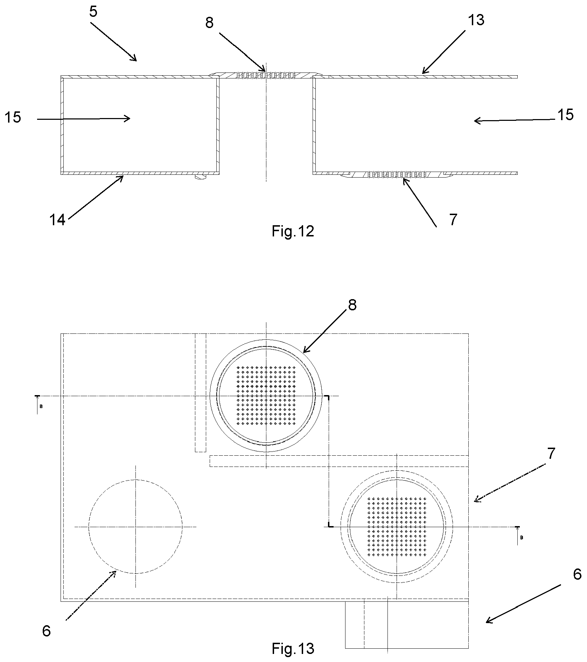

With particular reference to Figs. 11, 12, 13 is shown, in detail, the system for conditioning and propagating/diffusing conditioned air to the cultivable volume which is below the movable roof (5) .

Said system is based on a series of horizontal diffusion vents (7) for the propagation of said conditioned air to the underlying cultivable volume and vents (8) for air recirculation that are suitably inserted in the movable roof (5). The movable roof is in fact formed by an upper surface (13) and a lower surface (14) which enclose a gap (15) inside which the conditioned air is brought through the side vents (6) for the subsequent diffusion to the underlying cultivable volume. In particular, the horizontal diffusion vents (7) are integral with the lower surface (14) of the movable roof (5), connecting the gap (15) with the underlying cultivable compartment and allowing the conditioned air present in the gap (15) to spread downwards. The vents for air recirculation are instead integral with the upper surface (13) of the movable roof (14) and connect the underlying cultivable compartment with the outside i.e. the volume that is not conditioned which is located above the movable roof (5) and allow the air and possible exhaust gases to pass through the gap (15) and to be discharged/released towards the outside of the cultivation module (100). Industrial Applicability

The proposed solution allows to considerably reduce the energy necessary for the conditioning of cultivation environments such as greenhouses and the like. Thanks to the proposed device it is possible to cultivate during winter vegetable species that require warm and/or dehumidified climates and during summer cultivate species requiring cool and/or wet climates, minimizing the energy consumption thanks to the ability to adapt the volume of air in function of the growth stage of the plant itself The invention may further include all those variations of detail and implementation and those changes that may prove obvious to a person skilled in the art. By way of example and not of limitation, it is observed that it could be possible to vary the geometric shapes of the parts involved, the translation mechanisms of the movable roof, the sensors used for progressively detecting the crops growth or the shape of the heat exchangers and of the vents that allow the conditioning of the volume usable for the plants growth.

## Claims

1. **Modular** unit (100) for adaptive greenhouse capable to adjust its height following the growth of the nursery crops housed in a cultivable volume, said modular unit (100) comprising:
• a frame comprising vertical columns (1) containing, in their metal profile (2), a worm screw (3) connected to an electric motor (4) controlled by an electronic control unit;
• a movable roof (5) connected to said worm screws (3), made of transparent material and composed by an upper surface (13) and a lower surface (14), said surfaces (13, 14) enclosing a gap (15); said gap (15) comprising vents for the conditioning of the underlying cultivable volume; • bellows side walls (10) consisting of transparent and thermally insulating material; said bellows side walls (10) extending below the movable roof (5) and enclosing the cultivable volume; said bellows side walls (10) sliding along the vertical columns (1);
said modular unit (100) being **characterised by**:
• a laser lever-based detection system (16) positioned under the movable roof (5) and connected to the electronic control unit;
• electrical interconnection means and data connection means with further adjacent modular units;
• hydraulic interconnection means with further adjacent modular units.

2. Modular unit according to claim 1 wherein said vents for conditioning the cultivable volume comprise: • side vents (6) for the propagation of conditioned air from and towards other adjacent modular units; said vents being closable with appropriate plugs (9) if need be;
• vents (7) for the diffusion of conditioned air positioned in the lower surface (14) connecting the gap (15) to the cultivable volume;
• air recycling vents (8) positioned on the upper surface (13) connecting the cultivable volume with the unconditioned volume above the movable roof (5) ·

3. Modular unit according to claim 1 wherein said movable roof (5) further comprises a spraying irrigation system (11) fixed on its lower surface (14) and connected to a flexible and extensible pipe (12A).

4. Modular unit according to claim 1 wherein said movable roof (5) further comprises an illumination system (12B) installed on its lower surface (14).

5. Modular unit according to claim 1 wherein said worm screw (3) and said electric motor (4) used for the vertical translation of the movable roof can be replaced by mechanisms that are functionally equivalent such as hydraulic or pneumatic lifting systems, leverages and robotic arms.

## Patentansprüche

1. Modulare Einheit (100) für ein anpassungsfähiges Gewächshaus, das in der Lage ist, seine Höhe entsprechend dem Wachstum der in einem anbaubaren Volumen untergebrachten Baumschulpflanzen anzupassen, wobei die modulare Einheit (100) umfasst:
• einen Rahmen mit vertikalen Säulen (1), die in ihrem Metallprofil (2) eine Schneckenschraube (3) enthalten, die mit einem Elektromotor (4) verbunden ist, der von einer elektronischen Steuerungseinheit gesteuert wird;
• ein bewegliches Dach (5), das mit den Schneckenschrauben (3) verbunden ist, aus durchsichtigem Material besteht und aus einer oberen Fläche (13) und einer unteren Fläche (14) zusammengesetzt ist, wobei die Flächen (13, 14) einen Spalt (15) einschließen; der Spalt (15) umfasst Entlüftungsöffnungen für die Konditionierung des darunter liegenden anbaubaren Volumens;
• Faltenbalg-Seitenwände (10), die aus transparentem und wärmeisolierendem Material bestehen; wobei sich die Faltenbalg-Seitenwände (10) unterhalb des beweglichen Daches (5) erstrecken und das kultivierbare Volumen umfassen; wobei die Faltenbalg-Seitenwände (10) entlang der vertikalen Säulen (1) gleiten;
wobei die modulare Einheit (100) **dadurch gekennzeichnet ist, dass**:
• ein auf einem Laserhebel basierendes Erfassungssystem (16), das unter dem beweglichen Dach (5) angeordnet und mit der elektronischen Steuerungseinheit verbunden ist;
• elektrische Verbindungsmittel und Datenverbindungsmittel mit weiteren benachbarten modularen Einheiten;
• hydraulische Verbindungsmittel mit weiteren benachbarten modularen Einheiten.

2. Modulare Einheit nach Anspruch 1, wobei die Entlüftungsöffnungen zur Konditionierung des bebaubaren Volumens Folgendes umfassen: • seitliche Entlüftungsöffnungen (6) für die Ausbreitung der konditionierten Luft von und zu anderen benachbarten modularen Einheiten; wobei die Entlüftungsöffnungen gegebenenfalls mit geeigneten Stopfen (9) verschließbar sind;
• Entlüftungsöffnungen (7) für die Diffusion klimatisierter Luft, die in der unteren Fläche (14) angeordnet sind, die den Spalt (15) mit dem anbaubaren Volumen verbindet;
• Luftrückführungsöffnungen (8) auf der oberen Fläche (13), die das bebaubare Volumen mit dem unkonditionierten Volumen oberhalb des beweglichen Daches (5) verbinden.

3. Modulare Einheit nach Anspruch 1, bei der das bewegliche Dach (5) außerdem ein Sprühbewässerungssystem (11) aufweist, das auf seiner Unterseite (14) befestigt und mit einem flexiblen und dehnbaren Rohr (12A) verbunden ist.

4. Modulare Einheit nach Anspruch 1, wobei das bewegliche Dach (5) ferner ein Beleuchtungssystem (12B) umfasst, das an seiner Unterseite (14) installiert ist.

5. Modulare Einheit nach Anspruch 1, bei der die Schneckenschraube (3) und der Elektromotor (4), die für die vertikale Verschiebung des beweglichen Daches verwendet werden, durch Mechanismen ersetzt werden können, die funktional gleichwertig sind, wie hydraulische oder pneumatische Hebesysteme, Hebel und Roboterarme.

## Revendications

1. Unité modulaire (100) pour serre adaptative capable de régler sa hauteur en fonction de la croissance des cultures de pépinière logées dans un volume cultivable, ladite unité modulaire (100) comprenant :
• un cadre comprenant des colonnes verticales (1) contenant, dans leur profil métallique (2), une vis sans fin (3) reliée à un moteur électrique (4) commandé par une unité de commande électronique ;
• un toit mobile (5) relié auxdites vis sans fin (3), fait d'un matériau transparent et composé d'une surface supérieure (13) et d'une surface inférieure (14), lesdites surfaces (13, 14) entourant un espace (15) ; ledit espace (15) comprenant des évents pour le conditionnement du volume cultivable sous-jacent ;
• des parois latérales de soufflet (10) constituées d'un matériau transparent et thermiquement isolant ; lesdites parois latérales de soufflet (10) s'étendant sous le toit mobile (5) et enfermant le volume cultivable ; lesdites parois latérales de soufflet (10) coulissant le long des colonnes verticales (1) ;
ladite unité modulaire (100) étant **caractérisée par** :
• un système de détection à levier laser (16) positionné sous le toit mobile (5) et connecté à l'unité de commande électronique ;
• des moyens d'interconnexion électrique et des moyens de connexion de données avec d'autres unités modulaires adjacentes ;
• des moyens d'interconnexion hydraulique avec d'autres unités modulaires adjacentes.

2. Unité modulaire selon la revendication 1, dans laquelle lesdits évents pour conditionner le volume cultivable comprennent : • des évents latéraux (6) pour la propagation de l'air conditionné depuis et vers d'autres unités modulaires adjacentes ; lesdits évents pouvant être fermés avec des bouchons appropriés (9) si nécessaire ;
• des évents (7) pour la diffusion d'air conditionné positionnés dans la surface inférieure (14) reliant l'espace (15) au volume cultivable ;
• des évents de recyclage d'air (8) positionnés sur la surface supérieure (13) reliant le volume cultivable au volume non conditionné au-dessus du toit mobile (5).

3. Unité modulaire selon la revendication 1, dans laquelle ledit toit mobile (5) comprend en outre un système d'irrigation par pulvérisation (11) fixé sur sa surface inférieure (14) et relié à un tuyau flexible et extensible (12A).

4. Unité modulaire selon la revendication 1, dans laquelle ledit toit mobile (5) comprend en outre un système d'éclairage (12B) installé sur sa surface inférieure (14).

5. Unité modulaire selon la revendication 1, dans laquelle ladite vis sans fin (3) et ledit moteur électrique (4) utilisés pour la translation verticale du toit mobile peuvent être remplacés par des mécanismes qui sont fonctionnellement équivalents tels que des systèmes de levage hydrauliques ou pneumatiques, des leviers et des bras robotiques.
